# FASCICULE DE BREVET EUROPEEN

(11) **EP 1 706 293 B1**
(45) Date de publication et mention de la délivrance du brevet: **10.10.2007**
(21) Numéro de dépôt: 04805838.2
(22) Date de dépôt: 17.11.2004
(51) Int. Cl.: B60R 19/18

(54) **ARMATURE DE PARE-CHOCS DESTINEE A ETRE IMPLANTEE A L AVANT D UN VEHICULE AUTOMOBILE**
STOSSFÄNGERVERSTÄRKUNG, DIE AM VORDERENDE EINES KRAFTFAHRZEUGS INSTALLIERT WERDEN SOLL
BUMPER REINFORCEMENT WHICH IS INTENDED TO BE INSTALLED AT THE FRONT END OF A MOTOR VEHICLE

(30) Priorité: 18.11.2003 FR 0313482
(43) Date de publication de la demande: 04.10.2006
(73) Titulaire: Peugeot Citroën Automobiles, 78140 Velizy-Villacoublay (FR)
(72) Inventeur: BONTE, Eric, F-28410 Boutigny sur Opton (FR); LAIR, Renaud, F-92260 Fontenay aux Roses (FR); BOVA, Vincent, 91310 MONTLHERY (FR); JACQUEMARD, Ivan, F-92130 Issy les Moulineaux (FR)
(86) Numéro de dépôt international: PCT/FR2004/050595
(87) Numéro de publication internationale: WO 2005/049383

(56) Documents cités:
- DE-A- 10 226 756
- DE-C- 4 119 638
- GB-A- 951 690
- GB-A- 2 141 722

## Description

L'invention concerne une armature de pare-chocs et plus particulièrement celle destinée à être implantée à l'avant d'un véhicule automobile. DE 41 19 638 C montre une armature de pare-chocs destinée a être implantée a l'avant d'un véhicule automobile a comprenant une poutre 3 de pare-chocs, destinée a être implanté en travers du véhicule automobile et adaptée pour transmettre les chocs subis à l'avant du véhicule dont la partie centrale a une surface frontale et destinée a être implanté à l'extrémité d'un brancard 1 de la caisse automobile et adapté, pour absorber tout ou partie des chocs subis a l'avant du véhicule, lorsque la partie centrale de la poutre présente deux branches sensiblement parallèles entre elles, de section transversale sensiblement constante, réunies entre elles par une portion sensiblement semi-circulaire à proximité de chacune des extrémités.

Actuellement, la conception de la face avant d'un véhicule automobile est de plus en plus complexe car elle doit répondre à un grand nombre de prestations dont celles liées aux chocs frontaux que le véhicule est susceptible de subir. Une réglementation très stricte a été mise en place pour ces chocs frontaux. La réglementation européenne est actuellement la plus stricte et prévoit tout un ensemble important de tests très contraignants parmi lesquels ceux communément désignés par « choc piéton », « résistance aux petits chocs et aux chocs dits »chocs parking », « chocs réparabilité », « chocs à grande vitesse »...

Pour répondre à ces prestations liées aux chocs frontaux, la plupart des constructeurs de véhicule a conçu et développé des armatures de pare-chocs de structure complexe.

Actuellement, un consensus technique semble arrêté selon lequel les armatures implantées directement à l'avant des brancards sont constituées essentiellement d'une partie centrale sous la forme d'une poutre monobloc rigide dont la partie centrale a une section sensiblement constante et une hauteur égale à au moins 100 mm, adaptée pour transmettre les efforts subis lors des chocs frontaux et implantée en travers du véhicule, et de deux absorbeurs identiques solidaires chacun d'une extrémité de la poutre et adaptés pour absorber l'énergie des chocs sans détérioration des brancards en bout desquels ils sont implantés.

Parmi ces armatures, on peut citer les armatures de pare-chocs avec une poutre en acier HLE emboutie à froid, avec une poutre en acier THLE emboutie à chaud, une poutre en aluminium profilée et cintrée, une poutre en acier HLE hydro-formée dans laquelle les absorbeurs sont venus de matière avec la poutre. La poutre de l'ensemble de ces armatures est monobloc de section sensiblement constante et a une hauteur au moins égale à 100 mm. Ces armatures sont, par construction de la face avant des véhicules, implantées immédiatement devant le groupe moto-ventilateur.

Le groupe moto-ventilateur, en général d'une hauteur importante jusqu'à 500 mm, a besoin de recevoir un flux d'air important. C'est la raison pour laquelle la face avant des véhicules est construite de façon à laisser deux bouches d'entrée d'air distincts, l'une étant située en général dans le bouclier, l'autre au dessus.

A ce jour, l'implantation de ces deux bouches d'entrée d'air à l'avant du véhicule fait partie intégrante du style des véhicules automobiles.

La demanderesse a imaginé un autre style de face avant selon lequel une seule bouche d'entrée d'air serait implantée sur la partie inférieure de bouclier.

Or, la définition de cet autre style ne permet pas de conserver l'architecture de la face avant des véhicules en dessous du capot moteur et du bouclier telle qu'elle est actuellement.

En effet, comme il a été décrit plus haut, en conservant l'architecture actuelle de la face avant, la façade avant du groupe moto-ventilateur ne reçoit plus que le flux d'air provenant de l'unique bouche d'entrée d'air située dans le bouclier.

Plus exactement, elle ne reçoit que la fraction de flux non interceptée par la poutre monobloc de hauteur d'au moins 100 mm.

Ainsi, cette fraction de flux effectivement reçue par la façade avant du moto-ventilateur n'est pas suffisante pour assurer une bonne efficacité du groupe moto-ventilateur.

Le but de l'invention est alors de proposer une solution qui permette à un véhicule ayant un style de face avant selon lequel une seule bouche d'entrée d'air est implantée sur cette dernière, de répondre aux prestations réglementaires liées aux chocs frontaux, sans que cela ne nuise à l'efficacité du groupe moto-ventilateur du véhicule disposé à l'avant de ce dernier.

Pour ce faire, l'invention a pour objet une armature de pare-chocs destinée à être implantée à l'avant d'un véhicule automobile,

Par « bouche d'entrée d'air », on entend ici et dans le cadre de l'invention, un trou débouchant ménagé sur la face avant du véhicule, définitivement assemblé et dont le capot moteur est verrouillé, et dont la fonction est de permettre à l'air d'arriver directement sur la façade avant d'un groupe moto-ventilateur implanté à l'avant du véhicule.

Avec une telle armature, un véhicule, avec une face avant munie d'une seule bouche d'entrée d'air, a satisfait à l'ensemble des tests réalisés en choc frontal selon la selon la revendication 1. réglementation européenne la plus sévère(Directive sur le choc frontal CE 96/79 et critères retenus par l'organisme EURONCAP).

La solution selon l'invention qui vient d'être définie a pour avantage d'être très simple et peu coûteuse à mettre en oeuvre.

En outre, cette solution ne modifie pas le procédé d'assemblage du véhicule sur la ligne d'assemblage.

Selon un mode de réalisation préféré, la poutre selon l'invention est réalisée sous la forme d'une seule tôle emboutie.

Selon ce même mode de réalisation, la partie centrale comprend avantageusement à l'intérieur des branches au moins un renfort adapté pour augmenter la raideur de la poutre selon l'axe principal des absorbeurs.

De préférence, la partie centrale comprend exactement deux renforts de forme générale en Y, le fond du Y étant de forme sensiblement semi-circulaire et chaque renfort étant soudé à l'intérieur des branches par des points de soudure électrique.

Grâce à un tel assemblage, on s'assure d'un blocage efficace en rotation de la poutre dans le cas où une seule des deux branches de celle-ci serait impactée lors d'un choc frontal. Ainsi, dans le cas où le choc est de moindre ampleur, on évite à coup sûr que cette branche n'endommage le groupe moto-ventilateur. En d'autres termes, on s'assure ainsi d'un non basculement de la poutre en particulier en choc grande vitesse.

Selon cette même variante, la zone de chevauchement est au moins égale à 25% de la longueur de l'absorbeur.

D'autres détails et caractéristiques avantageuses ressortiront mieux à la lecture de la description détaillée d'un exemple de réalisation de l'armature selon l'invention faite en référence aux figures suivantes dans lesquelles :
- figure 1 : une vue en coupe longitudinale de la face avant d'un véhicule automobile ayant un style connu ;
- figure 2 : une vue en coupe longitudinale de la face avant d'un véhicule automobile ayant le nouveau style tel que mentionné plus haut avec une armature de pare-chocs selon l'invention;
- figure 3 : une vue arrière en perspective de l'armature de pare-chocs selon l'invention.

Dans la description qui suit et, plus généralement dans le cadre de l'invention, les termes supérieurs et inférieurs sont à comprendre en référence à la poutre une fois implantée sur le véhicule. Ainsi, l'adjectif « supérieur » se rapporte à une partie située au dessus du plan horizontal médian des absorbeurs selon l'axe vertical du véhicule, celui « inférieur » se rapporte à une partie située au dessous.

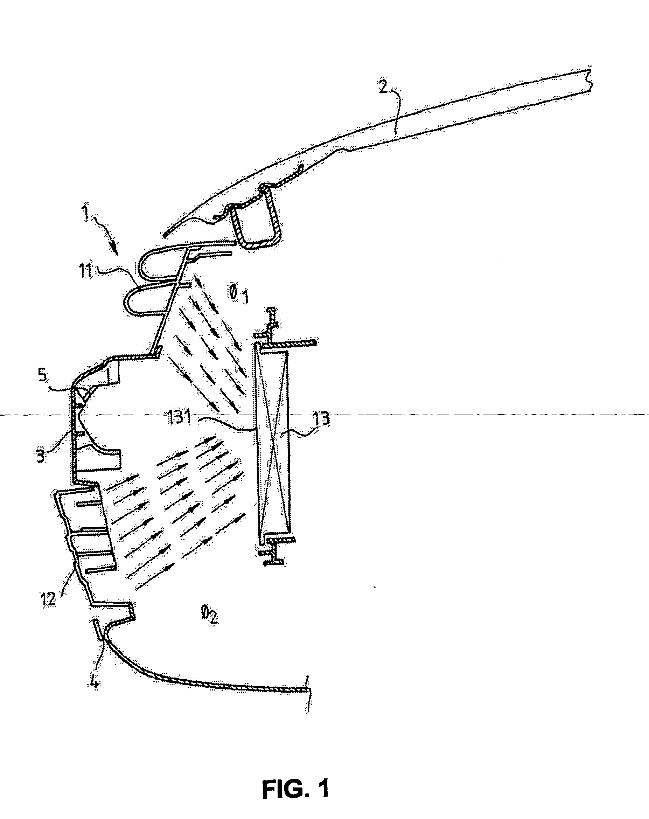

La figure 1 est une vue en coupe longitudinale de la face avant 1 d'un véhicule ayant un style largement répandu. Selon ce style largement répandu, cette face avant présente deux bouches d'entrée d'air 11,12 de dimensions transversales aux véhicules quasiment identiques.

La première bouche d'entrée d'air 11 est située au dessus de la ligne inférieure des phares du véhicule et s'étend entre le capot 2 et le pare-chocs 3 jusqu'au dessus de la ligne supérieure des phares dans la partie du capot moteur.

La deuxième bouche d'entrée d'air 12, non représentée mais située entre les deux phares, est, quant à elle, située en dessous de la ligne inférieure des phares du véhicule et entièrement dans la partie jupe 4 de l'habillage de pare-chocs.

Cette face avant 1 présente en dessous de la carrosserie à l'avant du groupe moto-propulseur, implanté selon l'axe longitudinal du véhicule, un groupe moto-ventilateur 13.

Immédiatement derrière le pare-chocs 2 et devant la façade avant 131 du groupe moto-ventilateur 13, est montée une poutre 5 unique de pare-chocs dont la hauteur est de l'ordre de 100mm.

Aux extrémités de cette poutre 5 sont montés, de manière connue en soi, des absorbeurs de chocs non représentés, directement montés aux extrémités du brancard non représenté également ici constituant ainsi une armature de chocs avec laquelle le véhicule passe les tests réglementaires contre le choc.

La façade avant 131 du groupe moto-ventilateur 13 reçoit effectivement comme flux d'air, d'une part toute la partie Ø ayant traversée la première bouche d'entrée d'air 11 et d'autre part toute la partie Ø ayant traversée la deuxième bouche d'entrée d'air 12.

Le groupe moto-ventilateur 13 a une efficacité assurée avec l'agencement qui vient d'être décrit.

En outre, la poutre 5 ainsi agencée permet au véhicule sur lequel elle est implantée de passer avec succès les tests de choc frontal.

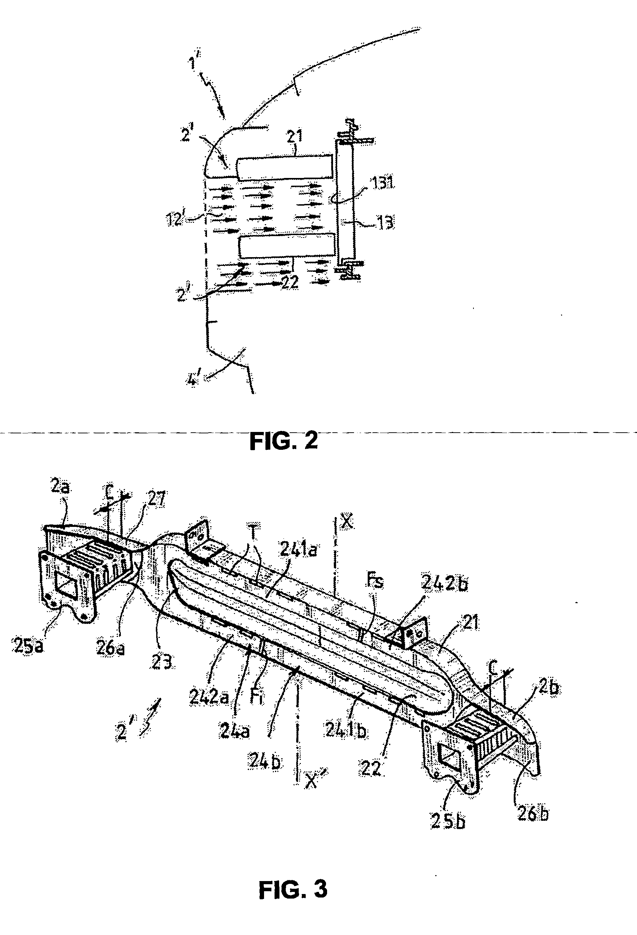

La figure 2 est une vue en coupe longitudinale de la face avant d'un véhicule avec un autre style tel que mentionné en préambule.

Selon cet autre style, la face avant 1' présente une seule bouche d'entrée d'air 12' située en dessous de la ligne inférieure des phares. Cette bouche d'entrée 12' a une hauteur plus grande que la deuxième bouche d'entrée 11 de la face avant 1 selon la figure précédente.

Par contre, son implantation dans la jupe 4' fait que son bord longitudinal supérieur a la même côte verticale que celui de la deuxième bouche d'entrée de la face avant selon la figure précédente.

Les autres éléments de la carrosserie et, en particulier, les phares conservent leur implantation et donc la même côte verticale que ceux de la face avant également selon la figure précédente.

Par choix technologique, les éléments du groupe moto-propulseur et, en particulier le moto-ventilateur 13, sont absolument identiques à ceux implantés sur le véhicule selon la figure 1. Leur implantation est également exactement la même. Ainsi, la façade avant 131 du groupe moto-ventilateur présente la même hauteur.

Avec une telle structure, il n'est pas possible d'implanter une armature de pare-chocs avec une poutre monobloc unique de hauteur de 100mm telle que montrée à la figure précédente.

En effet, en implantant une telle armature, la façade avant 131 du groupe moto-ventilateur 13 ne recevrait, en tant que flux d'air, que le flux traversant l'unique bouche d'entrée d'air et non intercepté par la poutre.

Or, des tests ont prouvé que ce dernier flux n'était pas suffisant pour obtenir une bonne efficacité du groupe moto-ventilateur 13.

C'est la raison pour laquelle les inventeurs ont défini l'armature avec la poutre 2' selon la figure 3.

La poutre 2' selon la figure 3 a également une hauteur totale de 100mm et présente dans sa partie centrale deux branches identiques 21, 22 parallèles entre elles réunies entre elles par une section sensiblement semi-circulaire 23 à proximité de chacune des extrémités latérales 2a, 2b de la poutre.

Chaque branche 21,22 a une hauteur égale.

Cette poutre 2' en tôle a été réalisée en un seul embouti. Cet embouti a été réalisé à chaud. Comme cela n'est pas représenté ici, la partie frontale avant de la poutre 2' a été revêtue d'un revêtement de type PVC qui permet à la poutre de résister aux impacts provoqués par les gravillons présents sur les routes.

Chaque moitié de poutre constituée des branches réunies entre elles par une section semi-circulaire 23 forme approximativement un Y et a été renforcée par un renfort 24a,24b de forme générale complémentaire soudée directement à l'intérieur des branches par des points de soudure électrique.

Les deux renforts 24a et 24b ne sont pas identiques et leur implantation est telle que leurs parties supérieures 241a, 241b en regard l'une de l'autre sont décalées transversalement par rapport aux parties inférieures 242a,242b également en regard l'une de l'autre selon l'axe transversal du véhicule.

Autrement dit, la fente (Fs) délimitée par le bord des parties supérieures 241a,242a est décalée transversalement par rapport à celle (Fi) délimitée par le bord des parties inférieures 241b,242b comme on peut le voir à la figure 3. Le décalage de ces fentes est créé volontairement pour éviter tout risque de rupture intempestif définitif de la poutre en cas de choc frontal amenant au préalable une rupture de l'embouti de la poutre 2' .

Chaque renfort 24a, 24b est évidé de plusieurs trous rectangulaires (T), ce qui permet d'alléger le poids total de la poutre 2'.

A chaque extrémité de la poutre est soudé un absorbeur d'énergie 25a,25b de forme générale en pyramide régulière à base rectangulaire et tronquée. Plus exactement, l'absorbeur 25a,25b est encastré de telle sorte que sa face avant vient en butée contre le fond de la gorge 26a, 26b de l'extrémité de la poutre de section transversale en U.

Les bords de cette section forment un rabat 27 surélevé par rapport à la partie plane supérieure de la poutre 2'. Ces rabats 27 entourent l'absorbeur et définissent une zone de chevauchement (C) importante avec l'absorbeur, égale à 25% de la longueur de l'absorbeur.

Des essais aux chocs frontaux selon la réglementation.....(Directive Européenne choc frontal 96/79) ont été réalisés avec un véhicule équipé de l'armature selon l'invention implantée en travers (tel que représenté à la figure 2).

Les résultats obtenus ont montré qualitativement que la raideur globale de la poutre 2' avec ses deux renforts associés 24a,24b permet de transmettre l'intégralité des chocs subis à l'avant du véhicule vers l'arrière de celui-ci de la même façon qu'une poutre monobloc 2.

De plus, il a été montré que l'encastrement de l'absorbeur 25a, 25b à l'intérieur de la poutre permet de bloquer la rotation de la poutre lors de l'impact en particulier lorsque seule la branche inférieure 22 est impactée lors du choc.

En effet, la poutre vient dans ce cas précis en butée contre les flans supérieurs et inférieurs des absorbeurs.

La solution selon l'invention qui vient d'être décrite est à la fois simple et peu coûteuse à réaliser.

Bien entendu, il va de soi que d'autres modifications peuvent être apportées sans pour autant sortir du cadre de l'invention.

Par exemple, la réalisation des deux branches de la poutre peut être faite à partir de deux tubes soudés directement sur les absorbeurs.

## Revendications

1. Armature de pare-chocs destinée à être implantée à l'avant d'un véhicule automobile, comprenant une poutre (2') de pare-chocs, destinée à être implantée en travers du véhicule automobile et adaptée pour transmettre les chocs subis à l'avant du véhicule dont la partie centrale a une surface frontale au moins égale à 100 millimètres et dont les deux extrémités (2a, 2b) sont chacune solidaire d'un absorbeur d'énergie (25a,25b), destiné à être implanté à l'extrémité d'un brancard de la caisse du véhicule automobile, et adapté pour absorber tout ou partie des chocs subis à l'avant du véhicule, dans laquelle la partie centrale (2') de la poutre présente deux branches sensiblement parallèles (21,22) entre elles, de section transversale sensiblement constante, réunies entre elles par une portion sensiblement semi-circulaire (23) à proximité de chacune des extrémités (2a,2b), la somme des hauteurs des deux branches étant égale à au moins 100 millimètres, et que chaque absorbeur (25a,25b) est soudé à une extrémité de la poutre et qu'il est encastré de sorte que la face avant de l'absorbeur vient en butée contre le fond de la section transversale en U de l'extrémité de la poutre, les bords de cette section définissant une zone de chevauchement (C) importante avec la périphérie de l'absorbeur.

2. Armature de pare-chocs selon la revendication 1, **caractérisée en ce que** la poutre est réalisée sous la forme d'une seule tôle emboutie.

3. Armature de pare-chocs selon la revendication 1, **caractérisée en ce que** la partie centrale (2') comprend à l'intérieur des branches au moins un renfort (24a, 24b) adapté pour augmenter la raideur de la poutre selon l'axe principal des absorbeurs.

4. Armature de pare-chocs selon la revendication 2, **caractérisée en ce que** la partie centrale comprend exactement deux renforts (24a, 24b) de forme générale en Y, le fond du Y étant de forme sensiblement semi-circulaire et chaque renfort (24a, 24b) étant soudé à l'intérieur des branches par des points de soudure électrique.

5. Armature de pare-chocs selon la revendication 4,
**caractérisée en ce que** la zone de chevauchement est au moins égale à 25% de la longueur de l'absorbeur.

6. Armature de pare-chocs selon la revendication 4,
**caractérisée en ce que** les deux renforts (24a) et (24b) sont agencés dans la poutre de telle manière qu'ils créent, entre chacune de leurs parties supérieure et inférieur, une fente (Fs) supérieure décalée transversalement par rapport à une fente (Fi) inférieure, pour éviter tout risque de rupture intempestif et définitif de la poutre.

## Claims

1. Bumper reinforcement intended to be installed at the front end of a motor vehicle, comprising a bumper beam (2') intended to be installed across the motor vehicle and designed to transmit impacts experienced at the front of the vehicle, the central part of which has a frontal surface measuring at least 100 millimetres and the two ends (2a, 2b) of which are each secured to an energy absorber (25a, 25b) intended to be installed at the end of a side member of the body of the motor vehicle and designed to absorb all or some of the impacts experienced at the front of the vehicle, in which reinforcement the central part (2') of the beam has two branches (21, 22) which are substantially mutually parallel and of substantially constant cross section, joined together by a substantially semicircular portion (23) near each of the ends (2a, 2b), the sum of the heights of the two branches being equal to at least 100 millimetres, and each absorber (25a, 25b) is welded to one end of the beam and is inbuilt in such a way that the front face of the absorber butts against the closed end of the U-shaped cross section of the end of the beam, the edges of this cross section defining a large region of overlap (C) with respect to the periphery of the absorber.

2. Bumper reinforcement according to Claim 1,
**characterized in that** the beam is produced in the form of a single pressed sheet.

3. Bumper reinforcement according to Claim 1,
**characterized in that** the central part (2') comprises, inside the branches, at least one reinforcing member (24a, 24b) designed to increase the stiffness of the beam along the main axis of the absorbers.

4. Bumper reinforcement according to Claim 2,
**characterized in that** the central part comprises exactly two reinforcing members (24a, 24b) in the overall shape of a Y, the closed end of the Y being of substantially semicircular shape and each reinforcing member (24a, 24b) being welded to the inside of the branches by electric arc spot welding.

5. Bumper reinforcement according to Claim 4,
**characterized in that** the region of overlap represents at least 25% of the length of the absorber.

6. Bumper reinforcement according to Claim 4,
**characterized in that** the two reinforcing members (24a) and (24b) are arranged in the beam in such a way that between each of their upper and lower parts they create an upper slot (Fs) that is transversely offset with respect to a lower slot (Fi), so as to avoid any risk of untimely and permanent breakage of the beam.

## Patentansprüche

1. Stoßfängerverstärkung, die am Vorderende eines Kraftfahrzeugs installiert werden soll, umfassend einen Stoßfängerbalken (2'), der dazu bestimmt ist, quer zu dem Kraftfahrzeug installiert zu werden, und der dazu ausgelegt ist, die Stöße zu übertragen, welche von dem Vorderende des Fahrzeugs erfahren werden, dessen Mittelteil eine Vorderfläche von mindestens 100 mm aufweist und dessen beiden Enden (2a, 2b) jeweils mit einem Energieabsorber (25a, 25b) zusammenhaltend ausgeführt sind, der dazu bestimmt ist, an dem Ende eines Längsträgers der Fahrzeugkarosserie installiert zu werden und der dazu ausgelegt ist, die Stöße ganz oder teilweise zu absorbieren, welche von dem Vorderende des Fahrzeugs erfahren werden, bei der der Mittelteil (2') des Balkens zwei zueinander im Wesentlichen parallele Zweige (21, 22) mit einem im Wesentlichen konstanten Querschnitt aufweist, die in der Nähe jedes der Enden (2a, 2b) durch einen im Wesentlichen halbkreisförmigen Abschnitt (23) miteinander verbunden sind, wobei die Summe der Höhen der beiden Zweige gleich mindestens 100 mm ist und jeder Absorber (25a, 25b) an ein Ende des Balkens gelötet und so eingebaut ist, dass die Vorderseite des Absorbers an dem Boden des U-förmigen Querschnitts des Endes des Balkens anliegt, wobei die Ränder dieses Abschnitts einen beträchtlichen Überlappungsbereich (C) mit dem Umfang des Absorbers bilden.

2. Stoßfängerverstärkung nach Anspruch 1, **dadurch gekennzeichnet, dass** der Balken in Form eines einzigen Stanzbleches gebildet ist.

3. Stoßfängerverstärkung nach Anspruch 1, **dadurch gekennzeichnet, dass** der Mittelteil (2') im Inneren der Zweige mindestens eine Verstärkung (24a, 24b) umfasst, die dazu ausgelegt ist, den Radius des Balkens entlang der Hauptachse der Absorber zu verstärken.

4. Stoßfängerverstärkung nach Anspruch 2, **dadurch gekennzeichnet, dass** der Mittelteil genau zwei Verstärkungen (24a, 24b) von allgemein y-artiger Form umfasst, wobei der Boden des Y von im Wesentlichen halbkreisförmiger Form ist und jede Verstärkung (24a, 24b) über elektrische Lötstellen an das Innere der Zweige gelötet ist.

5. Stoßfängerverstärkung nach Anspruch 4, **dadurch gekennzeichnet, dass** der Überlappungsbereich gleich mindestens 25 % der Länge des Absorbers ist.

6. Stoßfängerverstärkung nach Anspruch 4, **dadurch gekennzeichnet, dass** die beiden Verstärkungen (24a) und (24b) in dem Balken so angeordnet sind, dass sie zwischen ihren Ober- und Unterteilen einen oberen Spalt (Fs) bilden, der bezüglich einem unteren Spalt (Fi) in Querrichtung verschoben ist, um jedes vorzeitige und endgültige Reißen des Balkens zu verhindern.
